# EUROPEAN PATENT SPECIFICATION

(11) **EP 3 409 370 B1**
(45) Date of publication and mention of the grant of the patent: **05.08.2020**
(21) Application number: 16887969.0
(22) Date of filing: 29.01.2016
(51) Int. Cl.: B02C 19/18, B01F 3/08, B01F 3/12, B01J 19/08, B01F 13/00

(54) **METHOD FOR REDUCING PARTICLE SIZE OF FINE PARTICLES**
VERFAHREN ZUR REDUZIERUNG DER PARTIKELGRÖSSE VON FEINPARTIKELN
PROCÉDÉ POUR RÉDUIRE UNE TAILLE DE PARTICULE DE PARTICULES FINES

(43) Date of publication of application: 05.12.2018
(73) Proprietor: POKKA SAPPORO FOOD & BEVERAGE LTD., Nagoya-shi, Aichi 460-8415 (JP)
(72) Inventor: TAKAYANAGI, Junji, Kitanagoya-shi Aichi 481-8515 (JP); OSAWA, Naoki, Kitanagoya-shi Aichi 481-8515 (JP); INOUE, Takashi, Kitanagoya-shi Aichi 481-8515 (JP)
(74) Representative: Petraz, Gilberto Luigi
(86) International application number: PCT/JP2016/052702
(87) International publication number: WO 2017/130382

(56) References cited:
- WO-A1-2007/131917
- JP-A- H01 176 432
- JP-A- 2013 176 343
- JP-B2- 4 965 907
- US-A- 4 767 515
- US-A1- 2012 006 681

## Description

### TECHNICAL FIELD

The present invention relates to a method for efficiently reducing the size of fine particles through an alternating electric field process.

### BACKGROUND ART

In general, in a solution containing fine particles, particle size reduction may need to be performed to further reduce the fine particles in size from the viewpoint of producing an emulsified product and improving dispersion of the fine particles. Also, when the solution is used as a food or beverage, the particle size reduction may be needed from the viewpoint for improving, for example, the ingestion efficiency and the absorbability. A commercially available homogenizer has been used in the prior art as a particle size reduction means for further reducing the size of fine particles in a solution. Examples of the homogenizer include a high pressure homogenizer and an ultrasonic mill. A high pressure homogenizer pulverizes a subject by causing a fluid to move through a nozzle having one or more small holes and a specific flow passage at a high speed under a high pressure. An ultrasonic mill pulverizes a subject using ultrasonic waves. Additional examples of the homogenizer include a high speed rotation crushing mill, which pulverizes a subject through high speed agitation or crushing, and a ball mill or a bead mill, which uses pulverization media.

Patent Documents 1 and 2 disclose particle size reduction methods that are known in the art. Patent Document 1 discloses a method for manufacturing oil-in-water emulsified fat by performing a homogenizing process on the raw material of the oil-in-water emulsified fat twice or more under predetermined pressure using a homogenizer that includes a homogenizing valve and a homogenizing valve seat. Patent Document 2 discloses a method for decreasing the viscosity of a solution such as a vegetable juice by performing a high pressure homogenizing process on the solution.

### PRIOR ART DOCUMENTS

### PATENT DOCUMENTS

Patent Document 1: Japanese Laid-Open Patent Publication No. 2002-320446
Patent Document 2: Japanese Laid-Open Patent Publication No. 2008-301811

US 4,767,515 describes a method and system for solvent extraction in which a high intensity-pulsed electric field is applied to droplets of a dispersed phase in a column. The electric field is used to first disperse and then coalesce a dispersed phase in the presence of a counter current flow of a continuous phase

US 2012/006681 relates to a method of moving and handling an emulsion droplet, wherein a liquid dielectrophoretic actuation force is applied to one or more sample droplets to form an emulsion jet along a gap between electrodes of a first electrode structure. Liquid dielectrophoresis is an electromechanical phenomenon requiring the application of a non uniform electric field, not of an alternating electric field, and needs to be executed at a solid liquid interface.

WO 2007/131917 describes a process for preparing an emulsion of a first liquid in a second liquid and discloses the temperature of the liquids when the liquids are subjected to an electric field. However, there is no disclosure or suggestion in this document regarding the rate of change of the temperature of the liquids.

### SUMMARY OF THE INVENTION

### PROBLEMS THAT ARE TO BE SOLVED BY THE INVENTION

There is a demand that fine particles be further efficiently reduced in size. It is an object of the present invention to provide a method for efficiently reducing fine particles in size.

### MEANS FOR SOLVING THE PROBLEMS

The present invention is made based on a finding that an alternating electric field process efficiently reduces fine particles in size.

To achieve the above object and in accordance with one aspect of the present invention, a method for reducing fine particles in size is provided that includes the steps of supplying an electrically conductive solution containing the fine particles to an apparatus that includes an energizing unit connected to an AC power supply and performing an alternating electric field process on the solution thereby reducing the fine particles in size.

The fine particles have an average particle size of 0.1 to 200 µm that is measured by a particle size distribution measurement device of a laser diffraction scattering type. The fine particles are of at least one kind selected from solid particles and liquid droplets. The solution may be of at least one kind selected from a liquid squeezed out of a raw material, a liquid extracted from the raw material, and a suspension liquid of the raw material. The raw material is derived from a living organism and contains solid particles. The solution may be an oil-in-water emulsion. The solution is increased in temperature at a rate of 700°C to 1500°C per second by the alternating electric field process, and the temperature of the solution prior to the alternating electric field process and the temperature of the solution subsequent to the alternating electric field process may have a difference of 40°C to 80°C. The solution may be increased in temperature to a temperature that is in a range from 65°C to 105°C by the alternating electric field process. The energizing unit may be located in a closed system, and the solution may be continuously supplied to the energizing unit when voltage is applied to the energizing unit.

### EFFECT OF THE INVENTION

The present invention succeeds in efficiently reducing fine particles in size.

### BRIEF DESCRIPTION OF THE DRAWINGS

Fig. 1 is a schematic diagram of an alternating electric field processing apparatus used in one embodiment of a method for reducing fine particles in size.
Fig. 2 shows particle size distribution curves showing the relationship between the particle size and the cumulative distribution (volume percent) in a first test.
Figs. 3(a) to 3(c) each show particle size distribution curves showing the relationship between the particle size and the cumulative distribution (volume percent) in a second test, where Fig. 3(a) shows particle size distribution curves obtained when straight apple juice is used as the raw material solution, Fig. 3(b) shows particle size distribution curves obtained when straight shequasar juice is used as the raw material solution, and Fig. 3(c) shows particle size distribution curves obtained when straight blueberry juice is used as the raw material solution.
Fig. 4 shows particle size distribution curves showing the relationship between the particle size and the cumulative distribution (volume percent) in a third test.
Figs. 5(a) and 5(b) each show particle size distribution curves showing the relationship between the particle size and the cumulative distribution (volume percent) in a fifth test, where Fig. 5(a) shows particle size distribution curves obtained when coffee cream is used as the raw material solution and Fig. 5(b) shows particle size distribution curves obtained when a milk beverage is used as the raw material solution.

### MODES FOR CARRYING OUT THE INVENTION

### (First Embodiment)

A first embodiment of a method for reducing fine particles in size according to the present invention will now be described. In the present embodiment of the method for reducing fine particles in size, a solution that includes solid particles as the fine particles is used as a raw material solution. The raw material solution is, for example, a liquid squeezed out of a raw material derived from a living organism, a liquid extracted from the raw material, or a suspension liquid of the raw material. The raw material solution may be one of the above liquids. Alternatively, two or more kinds of the liquids may be combined and used. The component of the solid particles is not particularly limited as long as the component is insoluble and derived from a living organism. The component is, for example, a fiber, a polysaccharide, or an insoluble protein.

The living organism from which the raw material solution is derived is not particularly limited. In a case that the raw material solution is used as a food or beverage after the solid particles are reduced in size, the raw material solution may be derived from any edible living organism such as an animal, a plant, a fungus, a microorganism, or an alga. Examples of the animal include domestic animals, such as cows, pigs, sheep, and chickens. Examples of the raw material derived from an animal include body parts, milk, and eggs. Examples of the plant include vegetables, fruits, leaf stem plants, cereals, tea plants, bean plants, tuberous plants, and root plants. Examples of the fruits include citrus fruits, rose family fruits, grape family fruits, and berries. Examples of the cereals include corn, wheat, and rice. Examples of the tuberous plants include potatoes. Examples of the root plants include tapioca. Examples of the bean plants include coffee beans and soybeans. Examples of the alga include marine algae, such as laver, kelp, wakame seaweed, and hijiki seaweed. Examples of the fungus include mushrooms, such as shiitake mushroom, meadow mushroom, enoki mushroom, and shimeji mushroom. Examples of the microorganism include lactobacillus, yeast, euglena, and spirulina. The above materials may be solely used. Alternatively, two or more kinds of the materials may be combined and used. More specifically, the raw material solution may be an extract of the raw material such as broth, a liquid squeezed out of a vegetable, a liquid squeezed out of a fruit (fruit juice), a liquid extracted from tea leaves, a liquid extracted from coffee (coffee extract), miso soup, or a suspension liquid containing cereal powder, such as corn soup.

Examples of a solvent used for the extracted liquid or suspension liquid of a living organism-derived material include water, an organic solvent, and a mixed liquid of water and an organic solvent. Examples of the organic solvent include lower alcohols, such as methanol, ethanol, butanol, and isopropanol; acetonitrile; acetone; ethyl acetate; and hexane. The solvents may be solely used. Alternatively, two or more kinds of the solvents may be combined and used. The appropriate solvent may be selected from the above solvents in accordance with the application purpose of the solution. However, it is preferred from the viewpoint for performing an alternating electric field process, which will be described later, that the solvent used contain water as the main component to make the solution electrically conductive.

The amount of solid particles contained in the raw material solution is not particularly limited. However, it is preferred that the content amount be such that the solution has fluidity from the viewpoint for performing the alternating electric field process while supplying the solution to an apparatus that includes an energizing unit connected to an AC power supply and will be described later. More specifically, it is preferred that the content amount of the solid matter be such that the viscosity of the solution is less than or equal to 10 Pa·s at 25°C. The solution having a viscosity of 10 Pa·s or less facilitates a continuous performance of the alternating electric field process, which will be described later.

The average particle size of the solid particles in the raw material solution has a lower limit, which is not particularly limited. However, it is preferred that the lower limit be greater than or equal to 0.1 µm and, more preferably, greater than or equal to 1 µm. When the average particle size is greater than or equal to 0.1 µm, particle size reduction of the solid particles can be further efficiently performed. The average particle size of the solid particles in the raw material solution has an upper limit, which is not particularly limited. However, it is preferred that the upper limit be less than or equal to 200 µm and, more preferably, less than or equal to 100 µm. When the average particle size is less than or equal to 200 µm, particle size reduction of the solid particles can be further efficiently performed. The average particle size is obtained through a laser diffraction scattering process. The average particle size may be measured by a commercially available particle size distribution measurement device of a laser diffraction scattering type.

In a volume-based particle size distribution obtained through the laser diffraction scattering process, the diameter of a particle at the point when the cumulative particle volume, which is obtained by accumulating the volume of each of the solid particles in the raw material solution in order from the smallest particle, reaches 10% of the total volume of all the solid particles (10% volume cumulative particle size) is not particularly limited. However, it is preferred that the particle diameter be greater than or equal to 0.05 µm and, more preferably, greater than or equal to 0.1 µm. When the particle diameter is greater than or equal to 0.05 µm, particle size reduction of the solid particles can be further efficiently performed. In the particle size distribution obtained through the laser diffraction scattering process, the diameter of a particle at the point when the cumulative particle volume, which is obtained by accumulating the volume of each of the solid particles in the raw material solution in order from the smallest particle, reaches 90% of the total volume of all the solid particles (90% volume cumulative particle size) is not particularly limited. However, it is preferred that the particle diameter be less than or equal to 800 µm and, more preferably, less than or equal to 600 µm. When the particle diameter is less than or equal to 800 µm, particle size reduction of the solid particles can be further efficiently performed. The average particle size or the particle size distribution of the solid particles may be adjusted, for example, in a process for pulverizing the raw material or a filtering process or a centrifuging process performed subsequent to the pulverization.

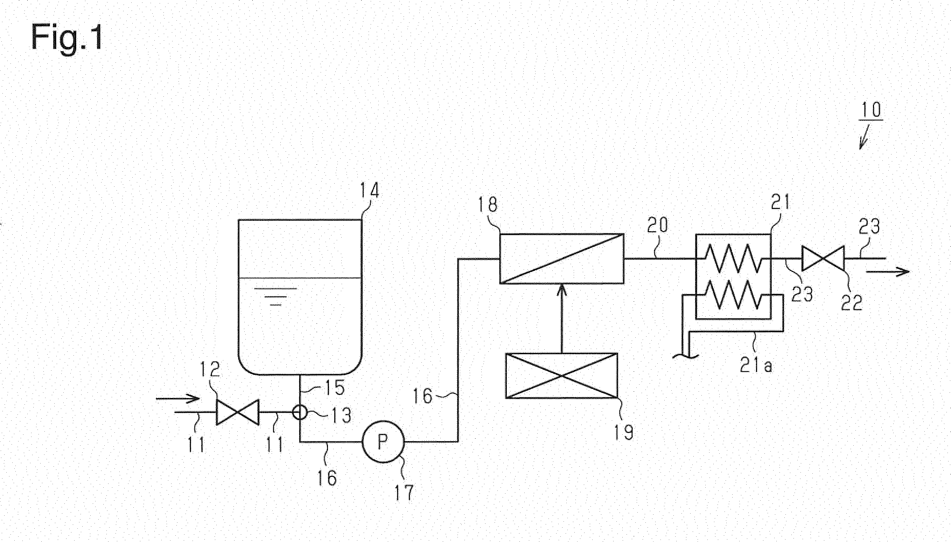

In the present embodiment of the method for reducing fine particles in size, an alternating electric field process is performed to reduce the particle size of the solid particles contained in the raw material solution. The alternating electric field process is performed by supplying the raw material solution to an apparatus that includes an energizing unit connected to an AC power supply. The supplying the raw material solution to an apparatus that includes an energizing unit connected to an AC power supply may be performed using, for example, an alternating electric field processing apparatus 10 that has a closed system and is shown in Fig. 1. The alternating electric field processing apparatus 10, which is used in the present embodiment of the method for reducing fine particles in size, will now be described.

As shown in Fig. 1, the raw material solution containing the solid particles, on which the alternating electric field process is to be performed, flows into the alternating electric field processing apparatus 10 through a pipe 11. A first valve 12, which opens and closes to control the entrance of the raw material solution, is located in an intermediate portion of the pipe 11. The pipe 11 includes a downstream end, to which a three-way valve 13 is connected. The pipe 11 is connected by the three-way valve 13 to a pipe 15, which is in communication with a raw material storage tank 14, and a pipe 16, which transfers the raw material solution toward an energizing unit 18. The raw material storage tank 14, which is configured to temporarily store the raw material, includes a lower end portion connected to the pipe 15, which is in communication with the inside of the raw material storage tank 14.

The pipe 16 is connected to an inlet port of the energizing unit 18 via a pump 17. The type of the pump 17 is not particularly limited. A known pump including, for example, a plunger pump, a cylinder pump, and a rotary pump may be used. The energizing unit 18 includes a liquid passage, which is located inside the energizing unit 18. The liquid passage includes one or more pairs of metal electrodes. The electrodes are connected to a controller 19, which functions as the AC power supply, and are configured to receive a high frequency alternating voltage applied from the controller 19. Each electrode is formed, for example, from an electrically conductive metal, such as iron, copper, stainless steel, titanium, or platinum. The surface of the electrode is covered by and in contact with an insulator. The electrode may be formed by one kind of metal or a combination of two or more kinds of metal. The distance between the electrodes in each pair may be set, for example, in accordance with the kind of the raw material, the voltage application time, and the applied voltage. However, it is preferred from the viewpoint of the efficiency of the alternating electric field process that the distance be 0.1 to 20 mm and, more preferably, 1 to 10 mm.

The energizing unit 18 includes an outlet port, which is connected by a pipe 20 to an inlet port of a heat exchange plate 21 used for cooling. The heat exchange plate 21 is connected to a pipe 21a, through which a cooling medium passes. The heat exchange plate 21 includes an outlet port, which is connected to a pipe 23 including a second valve 22. The second valve 22 may function to maintain (regulate) pressure. The alternating electric field processing apparatus 10 forms the closed system, which extends from the first valve 12 to the second valve 22.

The process for using the alternating electric field processing apparatus 10 will now be described.

The raw material solution containing the solid particles, which have not been processed, flows from the pipe 11 to the alternating electric field processing apparatus 10 through the first valve 12, which is open. The raw material solution may be temporarily stored in the raw material storage tank 14 through the three-way valve 13 if necessary. The raw material solution may be directly added to the raw material storage tank 14. The raw material solution is sent through the pipe 16 to the energizing unit 18 by the pump 17.

In the energizing unit 18, the controller 19 applies a predetermined high frequency alternating voltage to the electrodes to generate an electric field between the electrodes. When the raw material solution passes through between the electrodes of at least one pair in the energizing unit 18, the solid particles in the raw material solution are reduced in size. Any appropriate time may be set for applying the alternating voltage to the raw material solution in the energizing unit 18. However, it is preferred that the application time be within 1 second and, more preferably, within 0.5 seconds. It is further preferred that the application time be within 0.1 seconds. When the application time is within 1 second, the continuous alternating electric field process may be further efficiently performed. The application time may be adjusted, for example, by changing the flow amount or flow rate of the raw material solution, the length of the electrodes, or the number of electrodes. The frequency of the alternating voltage applied to the electrodes is not particularly limited. However, it is preferred from the viewpoint of the energy efficiency that the frequency be less than or equal to 100 kHz and, more preferably, less than or equal to 50 kHz.

During the alternating electric field process performed in the energizing unit 18, pressure may be applied to the raw material solution in the pipes. For example, it is preferred that the applied pressure be greater than or equal to saturated water vapor pressure obtained when 40°C is added to the temperature of the raw material solution. When the applied pressure is greater than or equal to the saturated water vapor pressure, the occurrence of micro sparks may be limited. The pressure in the energizing unit 18 is adjusted, for example, by the pump 17 and the second valve 22. Preferably, the pressure is greater than or equal to 0.2 MPa. More preferably, the pressure is greater than or equal to 0.5 MPa.

After the alternating electric field process is performed, the temperature of the solution containing the solid particles is increased by Joule heat, for example, to a temperature exceeding 40°C and, more specifically, a temperature in a range from 65°C to 105°C. It is preferred from the viewpoint for further efficiently reducing the size of the solid particles that the increase rate of the temperature of the solution be 700°C to 1,500°C per second. Preferably, the difference in the temperature of the solution is 40°C to 80°C between prior and subsequent to the alternating electric field process. The temperature of the solution is increased at an increase rate that cannot be obtained by indirect heating, for example, using a heat exchanger. This may further enhance the effect of the present invention. The solution on which the alternating electric field process has been performed is cooled by the heat exchange plate 21. The cooled solution is discharged to the exterior through the second valve 22. Since the alternating electric field processing apparatus 10 forms the closed system, which extends from the first valve 12 to the second valve 22, the raw material solution is continuously supplied to the energizing unit 18 when the voltage is applied to the energizing unit 18. This performs the alternating electric field process on the raw material solution.

The solid particles in the solution subsequent to the alternating electric field process are smaller than those prior to the alternating electric field process. The degree of reduction in the size of the solid particles is not particularly limited. However, it is preferred that the ratio of the average particle size of the solid particles subsequent to the alternating electric field process to the average particle size of the solid particles prior to the alternating electric field process be less than or equal to 0.5, and more preferably, less than or equal to 0.4. It is further preferred that the ratio be less than or equal to 0.3.

The present embodiment of the method for reducing fine particles in size has the advantages described below.
(1) In the present embodiment, the solution containing the solid particles, which are fine particles, is supplied to the alternating electric field processing apparatus 10 including the energizing unit 18, which applies the high frequency alternating voltage, to undergo the alternating electric field process. The high frequency alternating voltage is applied to the electrodes to generate the electric field between the electrodes in the energizing unit 18. When the raw material solution passes through between the electrodes, the solid particles are reduced in size. This allows for efficient reduction in the particle size of the solid particles.
(2) In the present embodiment, the raw material solution is of at least one kind selected from a squeezed liquid, an extracted liquid, and a suspension liquid of a raw material that is derived from a living organism and contains solid particles. Thus, the solid particles in the raw material solution are quickly and efficiently reduced in size while limiting denaturation of the natural properties.
(3) In the present embodiment, it is preferred that the temperature of the solution is increased at a rate of 700°C to 1,500°C per second by the alternating electric field process. Also, it is preferred that the difference in the temperature of the solution be 40°C to 80°C between prior and subsequent to the alternating electric field process. This allows for further efficient reduction in the size of the solid particles.
(4) In the present embodiment, the temperature of the solution may be increased to the range from 65°C to 105°C through the alternating electric field process. More specifically, the temperature of the solution that has been increased through the alternating electric field process may be 65°C to 105°C. In this case, the solid particles are reduced in size even when the temperature of the solution is not increased so much. In particular, the particle size is effectively reduced under a temperature condition (below 75°C) that is lower than that determined by the Food Sanitation Law of Japan for sterilizing squeezed fruit juice having a pH of less than 4.0. Additionally, thermal denaturation or thermal transformation of the components in the solution is further limited.
(5) In the present embodiment, the energizing unit 18 is arranged in the closed system of the alternating electric field processing apparatus 10. The raw material solution is continuously supplied to the energizing unit 18 when the voltage is applied to the energizing unit 18. This allows for further efficient reduction in the size of the solid particles.

### (Second Embodiment)

A second embodiment of a method for reducing fine particles in size according to the present invention will now be described. The second embodiment of a method for reducing fine particles in size differs from the first embodiment of a method for reducing fine particles in size in the points described below but otherwise has the same configuration. In the present embodiment of the method for reducing fine particles in size, the raw material solution used is a solution that includes liquid droplets, which are fine particles. Examples of the raw material solution include an emulsion, such as an oil-in-water emulsion and a water-in-oil emulsion. Examples of the oil-in-water emulsion include an emulsion containing liquid droplets of animal fat, plant fat, or fish oil. More specifically, examples of the oil-in-water emulsion include dairy products, such as cow milk, fresh cream, and milk; coffee cream; cream; creamer; egg yolk; mayonnaise; and dressing. Examples of the water-in-oil emulsion include butter and margarine. The above elements may be solely used. Alternatively, two or more kinds of the elements may be combined and used as long as an emulsion state is obtained. Among the above, it is preferred from the viewpoint for performing the alternating electric field process that the raw material solution be an oil-in-water emulsion, which makes the solution highly electrically conductive. The raw material solution may further contain, for example, lipid, such as fat or oil, protein, an emulsifier, or a dispersant to form the liquid droplets, which are fine particles, in addition to the solvent component, such as water.

The average particle size of the liquid droplets in the raw material solution has a lower limit, which is not particularly limited. However, it is preferred that the lower limit be greater than or equal to 0.1 µm and, more preferably, greater than or equal to 1 µm. When the average particle size is greater than or equal to 0.1 µm, particle size reduction of the liquid droplets can be further efficiently performed. The average particle size of the liquid droplets in the raw material solution has an upper limit, which is not particularly limited. However, it is preferred that the upper limit be less than or equal to 200 µm and, more preferably, less than or equal to 100 µm. When the average particle size is less than or equal to 200 µm, particle size reduction of the liquid droplets can be further efficiently performed. The average particle size is obtained through the laser diffraction scattering process.

In the particle size distribution obtained through the laser diffraction scattering process, the diameter of a particle at the point when the cumulative particle volume, which is obtained by accumulating the volume of each of the liquid droplets in the raw material solution in order from the smallest particle, reaches 10% of the total volume of all the liquid droplets (10% volume cumulative particle size) is not particularly limited. However, it is preferred that the particle diameter be greater than or equal to 0.1 µm and, more preferably, greater than or equal to 1 µm. When the particle diameter is greater than or equal to 0.1 µm, particle size reduction of the liquid droplets can be further efficiently performed. In the particle size distribution obtained through the laser diffraction scattering process, the diameter of a particle at the point when the cumulative particle volume, which is obtained by accumulating the volume of each of the liquid droplets in the raw material solution in order from the smallest particle, reaches 90% of the total volume of all the liquid droplets (90% volume cumulative particle size) is not particularly limited. However, it is preferred that the particle diameter be less than or equal to 500 µm and, more preferably, less than or equal to 300 µm. When the particle diameter is less than or equal to 500 µm, particle size reduction of the liquid droplets can be further efficiently performed. The average particle size or the particle size distribution of the liquid droplets may be adjusted, for example, in a process for agitating or centrifuging the raw material.

In the present embodiment of the method for reducing fine particles in size, an alternating electric field process is performed to reduce the particle size of the liquid droplets contained in the raw material solution. The alternating electric field process is performed by supplying the raw material solution to an apparatus that includes an energizing unit connected to an AC power supply. The supplying the raw material solution to an apparatus that includes an energizing unit connected to an AC power supply may be performed through the same method as the first embodiment using, for example, the alternating electric field processing apparatus 10 having the closed system and shown in Fig. 1.

The present embodiment of the method for reducing fine particles in size has the advantage described below in addition to the advantages of the first embodiment.

(6) In the present embodiment, the solution containing the liquid droplets, which are fine particles, is used as the raw material solution. The liquid droplets in the solution are quickly and efficiently reduced in size while limiting degeneration of the components contained in the raw material solution. Thus, the method of the preset embodiment is particularly effective when the solution is used as a food or beverage after the liquid droplets are reduced in size.
The first and the second embodiments may be modified as follows.
- In the above embodiments, the raw material solution may be processed by the alternating electric field processing apparatus 10 twice or more.
- In the above embodiments, the fine particles may be reduced in size using the alternating electric field processing apparatus 10 with the combination of a commercially available homogenizer.
- In the above embodiments, a pressure meter or a thermometer may be arranged in any of the pipes of the alternating electric field processing apparatus 10.
- The application of the method for reducing fine particles in size according to the present invention is not limited to a particular field. The method may be applied to the field of, for example, food, beverages, medicine, cosmetics, and chemical products. Additionally, the raw material solution may further contain, for example, an additive that is typically used in each applied field.

### Examples

The above embodiments will now be further specifically described with reference to test examples. However, the present invention is not limited to the test examples.

### <First Test: Related to Alternating Electric Field Process Performed on Liquid Squeezed Out of Citrus Fruit>

Liquids squeezed out of citrus fruits and containing solid particles, which are fine particles, were used as raw materials to prepare solutions of examples 1-1, 1-2, 1-3, 2-1, and 2-2 and comparative examples 1-1, 1-2, 2-1, and 2-2.

The solution of each of examples 1-1, 1-2, and 1-3 was obtained by performing the alternating electric field process on unsterilized straight lemon juice using the alternating electric field processing apparatus 10 shown in Fig. 1. The straight lemon juice was obtained by squeezing juice out of lemon through a known technique and filtering the squeezed juice through a 100 mesh screen to remove unnecessary substances. Also, 100 ppm of sodium benzoate, which acts as a preservative, was added to the straight lemon juice.

The solution of each of examples 2-1 and 2-2 was obtained by performing the alternating electric field process on straight lemon juice of a commercial product, which had been sterilized at 80°C or above for 30 seconds or longer, using the alternating electric field processing apparatus 10 shown in Fig. 1. Also, 100 ppm of sodium benzoate, which acts as a preservative, was added to the straight lemon juice of examples 2-1 and 2-2.

In the alternating electric field process, two parallel plate-shaped titanium electrodes were used. A PEEK insulator was located between the electrodes so that the distance between the electrodes was 4 mm, the width of each electrode was 6 mm, and the length of each electrode was 38 mm. The AC power supply had the output power, the frequency, and the maximum output voltage that were set to 25 kW, 20 kHz, and 2 kV, respectively. The flow rate of the raw material solution in the energizing unit 18 was set to 60 L per hour. The time taking the solution to pass through between the electrodes in the energizing unit 18 was set to 0.055 seconds. The amount of the voltage applied between the electrodes was changed to adjust the temperature of the solution to the range from 65°C to 105°C, which is shown in tables 1 and 2, immediately after the solution passed through between the electrodes. After the raw material solution passed through the energizing unit 18, the heat exchange plate 21 cooled the raw material solution to 30°C or below.

The solution of comparative example 1-1 was the same as the solutions of examples 1-1, 1-2, and 1-3 obtained prior to the alternating electric field process. In other words, the solution of comparative example 1-1 was unsterilized straight lemon juice to which 100 ppm of sodium benzoate was added.

The solution of comparative example 1-2 was obtained by supplying the same straight lemon juice as used in examples 1-1, 1-2, and 1-3 to the alternating electric field processing apparatus 10 shown in Fig. 1 without applying voltage to the energizing unit 18. More specifically, the alternating electric field process was not performed on the solution of comparative example 1-2.

The solution of comparative example 2-1 was obtained by supplying the same straight lemon juice as used in examples 2-1 and 2-2 to the alternating electric field processing apparatus 10 shown in Fig. 1 without applying voltage to the energizing unit 18. More specifically, the alternating electric field process was not performed on the solution of comparative example 2-1.

The solution of comparative example 2-2 was obtained by sterilizing the same straight lemon juice as used in examples 2-1 and 2-2 at 82°C for 10 seconds with a commercially available sterilization device.

The particle size and the particle size distribution of fine particles (solid particles) contained in the solution of each example and comparative example were measured by the process described below.

### (Measurement of Particle Size and Particle Size Distribution)

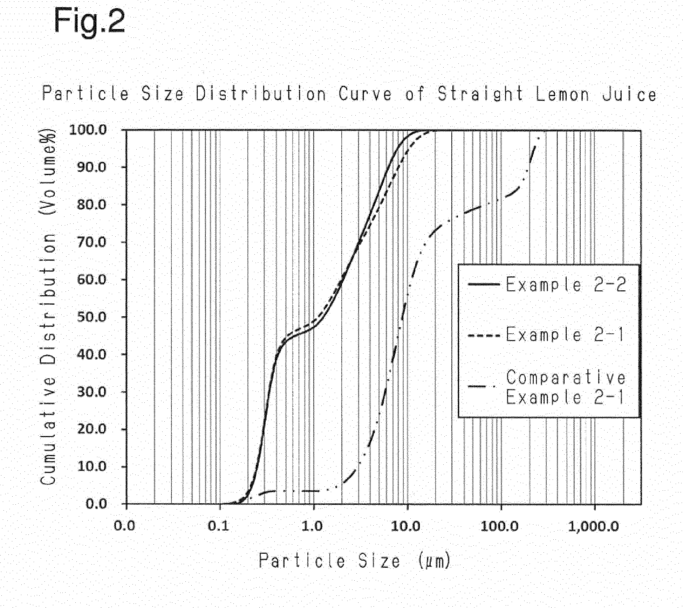

The particle size and the particle size distribution of the fine particles contained in the solution were measured by Particle Size Distribution Analyzer LA-950V2 (manufactured by HORIBA, Ltd.) through a laser diffraction scattering process. After the test samples were set in the device, the transmittance of the circulated solution was adjusted to approximately 80% to 90% for a semiconductor laser beam and approximately 70% to 90% for LED light. When each transmittance was stabilized, the particle size distribution, the median diameter, the average particle size were measured in a range from 0 to 3,000 µm. Tables 1 and 2 show the results of the measured median diameter and average particle size. Fig. 2 shows particle size distribution curves showing the relationship between the particle size and the cumulative distribution (volume percent) in examples 2-1 and 2-2 and comparative example 2-1.

**[Table 1]**

| | Comparative Example 1-1 | Comparative Example 1-2 | Example 1 | | |
|---|---|---|---|---|---|
| | | | Example 1-1 | Example 1-2 | Example 1-3 |
| Kind of Raw Material Juice | Straight Lemon Juice (Not Heat-Treated) | | | | |
| Temperature After High Electric Field Process (°C) | - (Not Processed) | (Only Supplied to Apparatus) | 65 | 70 | 75 |
| Temperature Before Process (°C) | 25 | 25 | 25 | 25 | 25 |
| Temperature Increase (ΔT, °C) | - | - | 40 | 45 | 50 |
| Current (A) | - | - | 12.3 | 13.4 | 13.8 |
| Electric Field (V/cm) | - | - | 841.6 | 876.0 | 861.6 |
| In-Pipe Pressure (MPa) | - | 0.660 | 0.660 | 0.668 | 0.670 |
| Process Time (sec) | - | - | 0.055 | 0.055 | 0.055 |
| Temperature Increase Rate (°C/sec) | - | - | 731.0 | 822.4 | 913.7 |
| Median Diameter (µm) | 8.8 | 10.5 | 2.4 | 1.2 | 1.1 |
| Average Particle Size (µm) | 45.1 | 61.6 | 12.5 | 3.3 | 2.8 |

**[Table 2]**

| | Comparative Example 2-1 | Comparative Example 2-2 | Example 2 | |
|---|---|---|---|---|
| | | | Example 2-1 | Example 2-2 |
| Kind of Raw Material Juice | Straight Lemon Juice (Heat-Treated) | | | |
| Temperature After High Electric Field Process (°C) | (Only Supplied to Apparatus) | (Only Heated to 82°C for Shorter Time) | 75 | 105 |
| Temperature Before Process (°C) | 25 | 25 | 25 | 25 |
| Temperature Increase (ΔT, °C) | - | 57 | 50 | 80 |
| Current (A) | - | - | 13.2 | 18.0 |
| Electric Field (V/cm) | - | - | 825.6 | 958.4 |
| In-Pipe Pressure (MPa) | - | - | 0.673 | 0.672 |
| Process Time (sec) | - | 10 | 0.055 | 0.055 |
| Temperature Increase Rate (°C/sec) | - | - | 913.7 | 1462.0 |
| Median Diameter (µm) | 4.1 | 4.9 | 1.1 | 1.3 |
| Average Particle Size (µm) | 11.9 | 15.5 | 2.7 | 2.3 |

Tables 1 and 2 show that in each example, the fine particles (solid particles) in the solution were reduced in size more than those in the corresponding comparative example. Tables 1 and 2 also show that even when the temperature obtained subsequent to the alternating electric field process was relatively low (65°C to 75°C), the fine particles in the solution were reduced in size. In comparative example 2-2, in which only the high temperature sterilization process was performed at 82°C without performing the alternating electric field process, the median diameter and the average particle size tended to be slightly greater due to aggregation or for other reasons. The particle size distribution curves of Fig. 2 show that fine particles, the size of which was in a range approximately from 0.2 to 260 µm, were reduced in size by the alternating electric field process.

### <Second Test: Related to Alternating Electric Field Process Performed on Liquids Squeezed Out of Various Fruits>

Liquids squeezed out of various fruits were used as raw materials to prepare solutions of examples 3-1, 3-2, 4-1, 4-2, 5-1, and 5-2 and comparative examples 3, 4, and 5.

The solution of each of examples 3-1 and 3-2 was obtained by performing the alternating electric field process on straight apple juice of a commercial product, which had been sterilized at 80°C or above for 30 seconds or longer, using the alternating electric field processing apparatus 10 shown in Fig. 1. The solution of each of examples 4-1 and 4-2 was obtained by performing the alternating electric field process on straight shequasar juice of a commercial product, which had been sterilized at 80°C or above for 30 seconds or longer, using the alternating electric field processing apparatus 10 shown in Fig. 1. The solution of each of examples 5-1 and 5-2 was obtained by performing the alternating electric field process on straight blueberry juice of a commercial product, which had been sterilized at 80°C or above for 30 seconds or longer, using the alternating electric field processing apparatus 10 shown in Fig. 1. Also, 100 ppm of sodium benzoate, which acts as a preservative, was added to each juice.

In the alternating electric field process, the amount of the voltage applied between the electrodes was changed to adjust the temperature of the solution to a temperature of either 75°C or 105°C, which is shown in table 3, immediately after the solution passed through between the electrodes. The other conditions for the alternating electric field process were the same as those in the first test.

The solution of comparative example 3 was the same as the solutions of examples 3-1 and 3-2 obtained prior to the alternating electric field process. The solution of comparative example 4 was the same as the solutions of examples 4-1 and 4-2 obtained prior to the alternating electric field process. The solution of comparative example 5 was the same as the solutions of examples 5-1 and 5-2 obtained prior to the alternating electric field process.

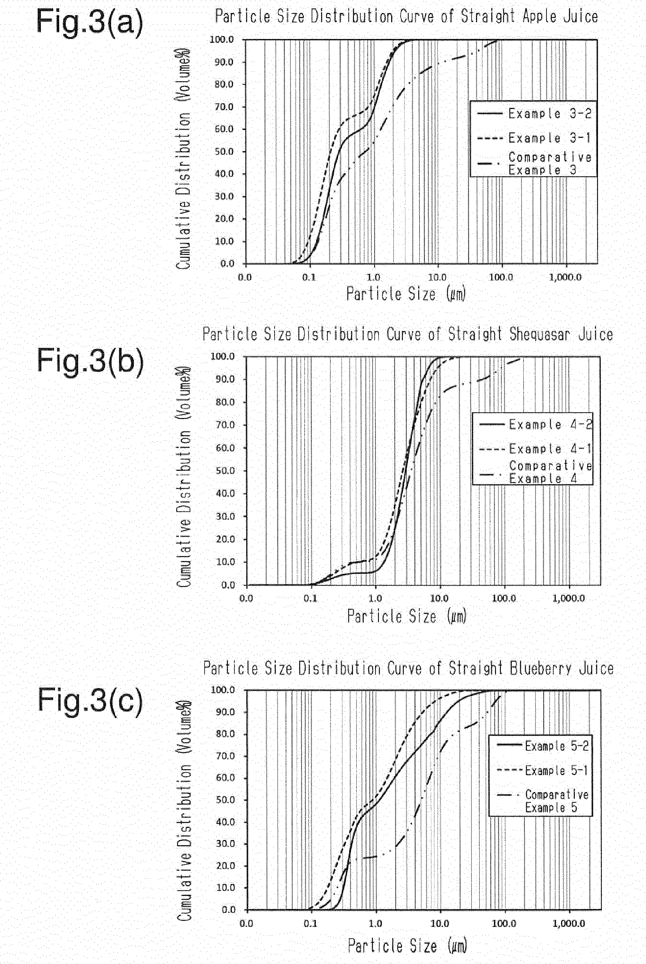

The particle size and the particle size distribution of fine particles (solid particles) contained in the solution of each example and comparative example were measured in accordance with the process described in the first test. The measurement results of the average particle size are shown in Table 3. Figs. 3(a) to 3(c) show particle size distribution curves showing the relationship between the particle size and the cumulative distribution (volume percent).

**[Table 3]**

| | Comparative Example 3 | Example 3 | | Comparative Example 4 | Example 4 | | Comparative Example 5 | Example 5 | |
|---|---|---|---|---|---|---|---|---|---|
| | | Example 3-1 | Example 3-2 | | Example 4-1 | Example 4-2 | | Example 5-1 | Example 5-2 |
| Kind of Raw Material Juice | Straight Apple Juice | | | Straight Shequasar Juice | | | Straight Blueberry Juice | | |
| Temperature After High Electric Field Process (°C) | (Not Processed) | 75 | 105 | (Not Processed) | 75 | 105 | (Not Processed) | 75 | 105 |
| Temperature Before Process (°C) | 25 | 25 | 25 | 25 | 25 | 25 | 25 | 25 | 25 |
| Temperature Increase (ΔT, °C) | - | 50 | 80 | - | 50 | 80 | - | 50 | 80 |
| Current (A) | - | 9.5 | 12.7 | - | 12.8 | 17.0 | - | 9.0 | 12.1 |
| Electric Field (V/cm) | - | 1292.8 | 1428.8 | - | 912.0 | 1012.0 | - | 1366.4 | 1525.6 |
| In-Pipe Pressure (MPa) | - | 0.630 | 0.637 | - | 0.670 | 0.672 | - | 0.634 | 0.636 |
| Process Time (sec) | - | 0.055 | 0.055 | - | 0.055 | 0.055 | - | 0.055 | 0.055 |
| Temperature Increase Rate (°C/sec) | Rate - | 913.7 | 1462.0 | - | 913.7 | 1462.0 | - | 913.7 | 1462.0 |
| Average Particle Size (µm) | 5.59 | 0.87 | 0.64 | 14.36 | 3.08 | 3.24 | 14.34 | 2.26 | 3.59 |

Table 3 shows that in each example, the fine particles (solid particles) contained in the solution were reduced in size more than those in the corresponding comparative example. Table 3 also shows that even when the temperature obtained subsequent to the alternating electric field process was relatively low (75°C), the fine particles in the solution were reduced in size.

The particle size distribution curves of Fig. 3(a) show that when the straight apple juice was used as the raw material juice, fine particles, the size of which was in a range approximately from 0.1 to 100 µm, were reduced in size by the alternating electric field process. The particle size distribution curves of Fig. 3(b) show that when the straight shequasar juice was used as the raw material juice, fine particles, the size of which was in a range approximately from 0.2 to 110 µm, were reduced in size by the alternating electric field process. The particle size distribution curves of Fig. 3(c) show that when the straight blueberry juice was used as the raw material juice, fine particles, the size of which was in a range approximately from 0.4 to 100 µm, were reduced in size by the alternating electric field process.

### <Third Test: Related to Alternating Electric Field Process Performed on Raw Material Solution Containing Large Particles>

Lemon juice containing lemon paste was used as a raw material to prepare solutions of example 6 and comparative example 6.

The solution of example 6 was obtained by performing the alternating electric field process on the lemon juice containing the lemon paste using the alternating electric field processing apparatus 10 shown in Fig. 1. The lemon juice containing lemon paste was obtained by adding crushed lemon (lemon paste) 1.5 g/L to a commercially available concentrated lemon juice 185 g/L and diluting the juice with water. The lemon juice contains fine particles, the size of which was in a range approximately from 5 to 590 µm.

In the alternating electric field process, the amount of the voltage applied between the electrodes was changed to adjust the temperature of the solution to 105°C immediately after the solution passed through between the electrodes. The other conditions for the alternating electric field process were the same as those in the first test.

The solution of comparative example 6 was the same as the solution of example 6 obtained prior to the alternating electric field process.

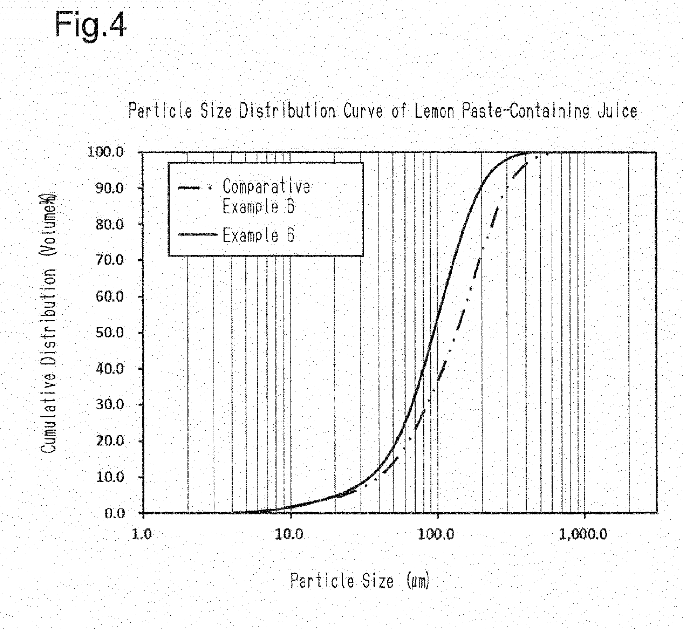

The particle size distribution of fine particles contained in the solution of each example and comparative example was measured in accordance with the process described in the first test. Fig. 4 shows particle size distribution curves showing the relationship between the particle size and the cumulative distribution (volume percent) for each of the solution obtained prior to the alternating electric field process (comparative example 6) and the solution obtained subsequent to the Alternating electric field process (example 6).

The particle size distribution curves of Fig. 4 show that fine particles, the size of which was relatively large and approximately 20 to 590 µm, were reduced in size by the alternating electric field process.

### <Fourth Test: Related to Comparison of Homogenizing Process and alternating Electric Field Process>

Lemon juice containing lemon paste was used as a raw material to prepare solutions of example 7, comparative example 7, and reference example 1.

The solution of example 7 was obtained by performing the alternating electric field process on the lemon juice containing the lemon paste using the alternating electric field processing apparatus 10 shown in Fig. 7. The lemon juice containing the lemon paste was the same as that used in example 6.

In the alternating electric field process, the amount of the voltage applied between the electrodes was changed to adjust the temperature of the solution to 105°C immediately after the solution passed through between the electrodes. The other conditions for the alternating electric field process were the same as those in the first test.

The solution of comparative example 7 was the same as the solution of example 7 obtained prior to the alternating electric field process.

The solution of reference example 1 was obtained by processing the same lemon juice containing the lemon paste as used in example 7 and comparative example 7 with a high pressure homogenizer. HV-OA1.8-3.7S manufactured by IZUMI FOOD MACHINERY Co., Ltd. was used as the high pressure homogenizer and performed a wet type homogenizing process under a condition of 5 MPa at the first stage and 5 MPa at the second stage. The size of fine particles contained in the solution of each example, comparative example, and reference example was measured in accordance with the process described in the first test. Table 4 shows the measurement results.

**[Table 4]**

| | Comparative Example 7 | Example 7 | Reference Example 1 |
|---|---|---|---|
| Kind of Raw Material Juice | Lemon Paste-Containing Juice | | |
| Temperature After High Electric Field Process (°C) | - (Not Processed) | 105 | (Homogenizing Process) |
| Temperature Before Process (°C) | 25 | 25 | 25 |
| Temperature Increase (ΔT, °C) | - | 80 | - |
| Current (A) | - | 17.5 | - |
| Electric Field (V/cm) | - | 1064.0 | - |
| In-Pipe Pressure (MPa) | - | 0.681 | 10 |
| Process Time (sec) | - | 0.055 | - |
| Temperature Increase Rate (°C/sec) | - | 1462.0 | - |
| Median Diameter (µm) | 134.1 | 93.6 | 102.8 |
| Average Particle Size (µm) | 155.0 | 107.6 | 120.3 |

Table 4 shows that the fine particles in the solution of example 7, which had undergone the alternating electric field process, were reduced in size more than those in the solution of reference example 1, which had undergone the homogenizing process under a high pressure condition.

### <Fifth Test: Related to Alternating Electric Field Process Performed on Solution Containing Liquid droplets>

Solutions containing liquid droplets were prepared as solutions of examples 8-1, 8-2, 9-1, and 9-2, comparative examples 8, 9-1, and 9-2, and reference examples 2 and 3.

The solution of each of examples 8-1 and 8-2 was obtained by sufficiently agitating and mixing 3.5 mass percent of olive oil, which was plant oil, 0.1 mass percent of salt, which functioned as an electrolyte, 10 ppm of sodium benzoate, and 0.1 mass percent of a commercially available emulsifier to obtain an oil-in-water emulsion (creamer) and performing the alternating electric field process on the oil-in-water emulsion using the alternating electric field processing apparatus 10 shown in Fig. 1.

The solution of each of examples 9-1 and 9-2 was obtained by sufficiently agitating and mixing 12 mass percent of powdered whole milk, 3.5 mass percent of fresh cream (animal fat 100%), and 0.1 mass percent of a commercially available emulsifier to obtain an oil-in-water emulsion (milk beverage) and performing the alternating electric field process on the oil-in-water emulsion using the alternating electric field processing apparatus 10 shown in Fig. 1.

In the alternating electric field process, the amount of the voltage applied between the electrodes was changed to adjust the temperature of the solution to 65°C immediately after the solution passed through between the electrodes. The other conditions for the alternating electric field process were the same as those in the first test.

The solution of comparative example 8 was the same as the solutions of examples 8-1 and 8-2 obtained prior to the alternating electric field process.

The solution of reference example 2 was obtained by processing the same oil-in-water emulsion as used in examples 8-1 and 8-2 with a high pressure homogenizer. The condition of the high pressure homogenizer was the same as that in reference example 1.

The solution of comparative example 9-1 was the same as the solutions of examples 9-1 and 9-2 obtained prior to the alternating electric field process.

The solution of comparative example 9-2 was obtained by supplying the same oil-in-water emulsion as used in examples 9-1 and 9-2 to the alternating electric field processing apparatus 10 shown in Fig. 1 without applying voltage to the energizing unit 18. More specifically, the alternating electric field process was not performed on the solution of comparative example 9-2.

The solution of reference example 3 was obtained by processing the same oil-in-water emulsion as used in examples 9-1 and 9-2 with a high pressure homogenizer. The condition of the high pressure homogenizer was the same as that in reference example 1.

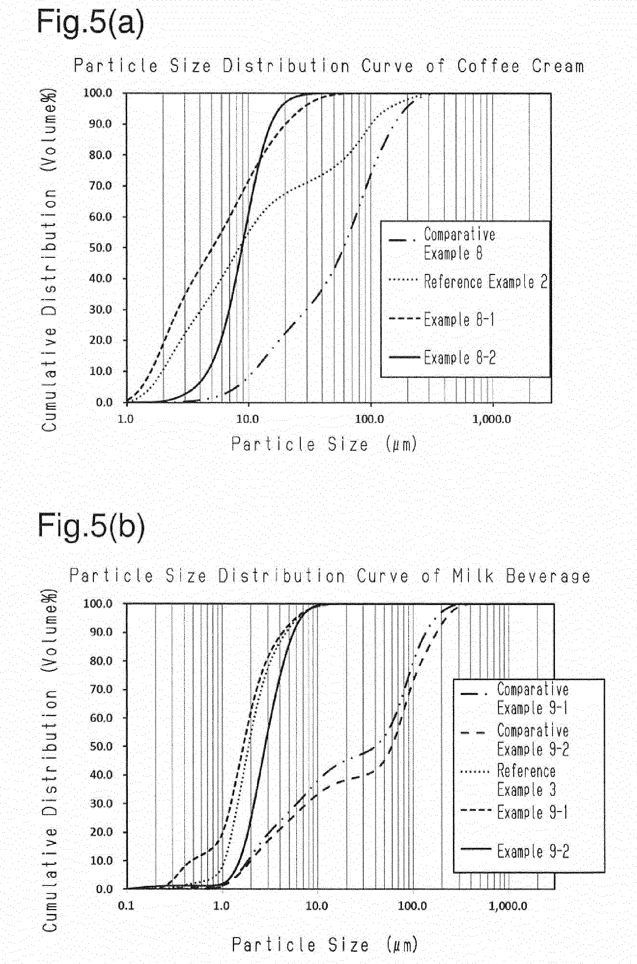

The particle size and the particle size distribution of fine particles contained in the solution of each example, comparative example, and reference example were measured in accordance with the process described in the first test. The measurement results of the average particle size are shown in Tables 5 and 6. Figs. 5(a) and 5(b) show particle size distribution curves showing the relationship between the particle size and the cumulative distribution (volume percent).

**[Table 5]**

| | Comparative Example 8 | Example 8 | | Reference Example 2 |
|---|---|---|---|---|
| | | Example 8-1 | Example 8-2 | |
| Kind of Raw Material Solution | Coffee Cream (Plant Oil) | | | |
| Temperature After High Electric Field Process (°C) | - (Not Processed) | 65 (High Electric Field Process After Homogenizing Process) | 65 | - (Homogenizin g Process) |
| Temperature Before Process (°C) | 25 | 25 | 25 | 25 |
| Temperature Increase (ΔT, °C) | - | 40 | 40 | - |
| Current (A) | - | 12.5 | 12.5 | - |
| Electric Field (V/cm) | - | 840.0 | 840.0 | - |
| In-Pipe Pressure (MPa) | - | 0.668 | 0.675 | 10 |
| Process Time (sec) | - | 0.055 | 0.055 | - |
| Temperature Increase Rate (°C/sec) | - | 731.0 | 731.0 | - |
| Average Particle Size (µm) | 72.7 | 8.4 | 9.5 | 32.9 |

**[Table 6]**

| | Comparative Example 9-1 | Comparative Example 9-2 | Example 9 | | Reference Example 3 |
|---|---|---|---|---|---|
| | | | Example 9-1 | Example 9-2 | |
| Kind of Raw Material Solution | Milk Beverage (Animal Fat) | | | | |
| Temperature After High Electric Field Process (°C) | - (Not Processed) | (Only Supplied to Apparatus) | 65 (High Electric Field Process After Homogenizing Process) | 65 | - (Homogenizing Process) |
| Temperature Before Process (°C) | 25 | 25 | 25 | 25 | 25 |
| Temperature Increase (ΔT, °C) | - | - | 40 | 40 | - |
| Current (A) | - | - | 13.0 | 13.0 | - |
| Electric Field (V/cm) | - | - | 810.0 | 810.0 | - |
| In-Pipe Pressure (MPa) | - | - | 0.678 | 0.674 | 10 |
| Process Time (sec) | - | - | 0.055 | 0.055 | - |
| Temperature Increase Rate (°C/sec) | - | - | 731.0 | 731.0 | - |
| Average Particle Size (µm) | 55.1 | 70.8 | 2.1 | 3.2 | 2.4 |

Tables 5 and 6 show that in each example, the fine particles (liquid droplets) in the solution were reduced in size more than those in the corresponding comparative example. Tables 5 and 6 also show that even when the temperature obtained subsequent to the alternating electric field process was relatively low (65°C), the fine particles in the solution were reduced in size. The particle size distribution curves of Figs. 5(a) and 5(b) show that fine particles, the size of which was in a range approximately from 1 to 300 µm, were reduced in size by the alternating electric field process.

Table 5 shows that the fine particles in the solution of example 8-2, which had undergone the alternating electric field process, were reduced in size more than those in the solution of reference example 2, which had undergone the homogenizing process under a high pressure condition. Table 6 shows that the size of the fine particles in the solution of example 9-2, which had undergone the alternating electric field process, was reduced to substantially the same level as that in the solution of reference example 3, which had undergone the homogenizing process under a high pressure condition. Additionally, it was confirmed that when the alternating electric field process was performed subsequent to the homogenizing process (examples 8-1 and 9-1), the fine particles were reduced in size more than when the alternating electric field process was performed without performing the homogenizing process (examples 8-2 and 9-2).

### DESCRIPTION OF THE REFERENCE NUMERALS

10: alternating electric field processing apparatus, 18: energizing unit, 19: controller as AC power supply.

## Claims

1. A method for reducing fine particles in size, the method comprising:
supplying an electrically conductive solution to an apparatus that includes an energizing unit (18) connected to an AC power supply (19), wherein the solution contains fine particles have an average particle size of 0.1 to 200 µm that is measured by a laser diffraction-scattering particle size distribution measurement device, and the fine particles are of at least one kind selected from the group consisting of solid particles and liquid droplets the components of which are derived from a living organism; and
increasing the solution in temperature at a rate of 700°C to 1500°C per second by performing an alternating electric field process on the solution thereby reducing the fine particles in size.

2. The method according to claim 1, wherein the solution is of at least one kind selected from the group consisting of a liquid squeezed out of a raw material, a liquid extracted from the raw material, and a suspension liquid of the raw material, and the raw material is derived from a living organism and contains solid particles.

3. The method according to claim 1, wherein the solution is an oil-in-water emulsion.

4. The method according to any one of claims 1 to 3, wherein the temperature of the solution prior to the alternating electric field process and the temperature of the solution subsequent to the alternating electric field process have a difference of 40°C to 80°C.

5. The method according to any one of claims 1 to 4, wherein the solution is increased in temperature to a temperature that is in a range from 65°C to 105°C by the alternating electric field process.

6. The method according to any one of claims 1 to 5, wherein the energizing unit (18) is located in a closed system, and the solution is continuously supplied to the energizing unit (18) when voltage is applied to the energizing unit (18).

7. The method according to any one of claims 1 to 6, wherein the energizing unit (18) includes electrodes between which the solution passes through, and the distance between the electrodes is 0.1 to 20 mm.

8. The method according to any one of claims 1 to 7, wherein the alternating electric field process includes applying an alternating voltage to the solution within 1 second.

## Patentansprüche

1. Verfahren zum Reduzieren der Größe von Feinpartikeln, wobei das Verfahren
Zuführen einer elektrisch leitfähigen Lösung zu einer Vorrichtung, die eine an eine Wechselspannungsversorgung (19) angeschlossene Energieversorgungseinheit (18) aufweist, wobei die Lösung Feinpartikel erhält, die eine mittlere Partikelgröße von 0,1 bis 200 µm aufweisen, die durch eine mit Laserbeugungsstreuung arbeitende Partikelgrößenverteilungsmessvorrichtung gemessen ist, und wobei die Feinpartikel mit wenigstens einem Bestandteil aus einer Gruppe ausgewählt sind, die aus Feststoffpartikeln und Flüssigkeitströpfchen besteht, deren Bestandteile aus einem lebenden Organismus stammen, und
Erhöhen der Temperatur in der Lösung mit einer Rate von 700°C bis 1.500°C pro Sekunde durch Durchführen eines elektrischen Wechselfeldprozesses auf die Lösung, um dadurch die Feinpartikel in der Größe zu reduzieren, umfasst.

2. Verfahren nach Anspruch 1, bei dem die Lösung wenigstens einen Bestandteil aus der Gruppe umfasst, die aus einer aus einem Rohmaterial herausgepressten Flüssigkeit, einer aus einem Rohmaterial extrahierten Flüssigkeit und einer flüssigen Suspension des Rohmaterials besteht, und wobei das Rohmaterial aus einem lebenden Organismus gewonnen ist und feste Partikel enthält.

3. Verfahren nach Anspruch 1, bei dem Lösung eine Emulsion von Öl in Wasser ist.

4. Verfahren nach einem der Ansprüche 1 bis 3, bei dem die Temperatur der Lösung vor Beginn des elektrischen Wechselfeldprozesses und die Temperatur der Lösung nach dem elektrischen Wechselfeldprozess eine Differenz von 40°C bis 80°C haben.

5. Verfahren nach einem der Ansprüche 1 bis 4, bei dem die Temperatur der Lösung durch den elektrischen Wechselfeldprozess auf eine Temperatur erhöht wird, die im Bereich von 65°C bis 105°C liegt.

6. Verfahren nach einem der Ansprüche 1 bis 5, bei dem die Energieversorgungseinheit (18) in einem geschlossenen System angeordnet ist und bei dem die Lösung der Energieversorgungseinheit (18) kontinuierlich zugeführt wird, wenn die Energieversorgungseinheit (18) mit Spannung beaufschlagt wird.

7. Verfahren nach einem der Ansprüche 1 bis 6, bei dem die Energieversorgungseinheit (18) Elektroden aufweist, zwischen denen die Lösung durchläuft, wobei der Abstand zwischen den Elektroden 0,1 bis 20 mm beträgt.

8. Verfahren nach einem der Ansprüche 1 bis 7, bei dem der elektrische Wechselfeldprozess das Beaufschlagen der Lösung mit einer Wechselspannung über 1 Sekunde umfasst.

## Revendications

1. Un procédé pour réduire la taille de fines particules, le procédé comprenant :
le fait de fournir une solution électriquement conductrice à un appareil qui comprend une unité d'excitation (18) connectée à une alimentation en courant alternatif (19), la solution contenant de fines particules ayant une taille moyenne de particules de 0,1 à 200 µm qui est mesurée par un dispositif de mesure de la distribution de la taille des particules par diffusion-diffraction laser, et les particules fines sont d'au moins un type choisi dans le groupe constitué de particules solides et de gouttelettes liquides dont les composants sont dérivés d'un organisme vivant ; et
le fait d'augmenter la température de la solution selon un taux de 700°C à 1500°C par seconde en mettant en œuvre un processus à champ électrique alternatif sur la solution, réduisant ainsi la taille des particules fines.

2. Le procédé selon la revendication 1, dans lequel la solution est d'au moins une sorte choisie dans le groupe constitué par un liquide pressé d'une matière première, un liquide extrait de la matière première et un liquide de suspension de la matière première, et la matière première est dérivée d'un organisme vivant et contient des particules solides.

3. Le procédé selon la revendication 1, dans lequel la solution est une émulsion huile-dans-eau.

4. Le procédé selon l'une quelconque des revendications 1 à 3, dans lequel la température de la solution avant le processus de champ électrique alternatif et la température de la solution postérieure au processus de champ électrique alternatif ont une différence de 40°C à 80°C.

5. Le procédé selon l'une quelconque des revendications 1 à 4, dans lequel la solution est augmentée en température par le processus de champ électrique alternatif jusqu'à une température qui est dans une gamme allant de 65°C à 105°C.

6. Le procédé selon l'une quelconque des revendications 1 à 5, dans lequel l'unité d'excitation (18) est située dans un système fermé, et la solution est fournie en continu à l'unité d'excitation (18) lorsqu'une tension est appliquée à l'unité d'excitation (18).

7. Le procédé selon l'une quelconque des revendications 1 à 6, dans lequel l'unité d'excitation (18) comprend des électrodes entre lesquelles passe la solution, et la distance entre les électrodes est de 0,1 à 20 mm.

8. Le procédé selon l'une quelconque des revendications 1 à 7, dans lequel le processus de champ électrique alternatif comprend le fait d'appliquer une tension alternative à la solution pendant une seconde.
